(19) Europäisches Patentamt
European Patent Office
Office européen des brevets

(11) **EP 2 644 888 A2**

(12) **EUROPEAN PATENT APPLICATION**

(43) Date of publication:
02.10.2013 Bulletin 2013/40

(51) Int Cl.:
*F03D 7/02* (2006.01)

(21) Application number: 13161423.2

(22) Date of filing: 27.03.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 30.03.2012 US 201213435249

(71) Applicant: General Electric Company
Schenectady, New York 12345 (US)

(72) Inventors:
• Blom, Rogier Sebastiaan
Niskayuna, NY 12309 (US)
• Boerlage, Matthijs Leonardus Gerardus
Niskayuna, NY 12309 (US)

(74) Representative: Bedford, Grant Richard
GPO Europe
GE International Inc.
The Ark
201 Talgarth Road
Hammersmith
London W6 8BJ (GB)

(54) **Control system and method for avoiding overspeed of a wind turbine**

(57) A method 41 includes obtaining 43 at least one operational parameter value and at least one environmental parameter value associated with a wind turbine 10, predicting 45 a future speed of the wind turbine 10 based upon the at least one operational parameter value and the at least one environmental parameter value, determining whether the predicted future speed of the wind turbine 10 exceeds a threshold speed, and if the predicted future speed of the wind turbine exceeds the threshold speed, controlling 49 the wind turbine so that an actual future speed of the wind turbine 10 does not exceed the threshold speed.

FIG. 4

**Description**

The present application relates generally to wind turbines. In particular, the present application relates to a method and system for controlling a wind turbine.

There has been a recent increase in focus on generating power using renewable sources of energy owing to various environmental and economic concerns. Wind turbines provide an efficient and relatively economical means for generating electric power. Considerable effort has been made in to develop reliable and efficient wind turbines.

Typically, a wind turbine includes at least one rotor mounted on a housing or nacelle which is positioned on top of a truss or a tubular tower. Certain wind turbines, designed to provide electrical power to utility grids, include large rotors with diameters extending 80 or more meters. Each of these rotors includes one or more blades. The rotor blades transform the wind energy into rotational energy or torque or force which drives a generator operationally coupled to the rotor. The generator may be coupled to the rotor either directly or via a gearbox. The gearbox is used for stepping up the inherently low rotational speed of the rotor so that the generator may efficiently convert the rotational energy into electrical power.

Under certain conditions such as an increase in wind speed or a failure in wind turbine components or under other faulty situations, the rotor of a wind turbine may rotate faster compared to normal conditions. If unchecked, the rotor would continue to accelerate until internal forces and resonances cause instability - a phenomenon known as over speeding. To avoid over speeding, modem wind turbines have mechanisms for controlling their rotor speeds. In general, wind turbines are equipped with protective features for avoiding damage at high wind speeds, such as by altering the angle of the rotor blades with respect to the wind direction by turning the rotor blades. This is known as pitch control. Furthermore, at least some known wind turbines also include braking systems to satisfy safety requirements. For example, some known wind turbines may include a disk brake to facilitate stopping the wind turbine rotor against full wind torque, and stored energy sources such as hydraulic accumulators or capacitors to enable braking during power failure.

However, under certain circumstances, there may be a loss of counter torque from the generator for controlling the rotor speed. In other circumstances, there may be a failure during feathering of one or more of the rotor blades. Under such circumstances, the wind turbine may be subjected to over speeding unless aggressive braking techniques are employed. Aggressive braking techniques may cause mechanical loading of the wind turbine.

Therefore, there is a need for an enhanced method and system for avoiding over speeding of wind turbines.

In accordance with aspects of the present disclosure, a method is disclosed. The method includes obtaining at least one operational parameter value and at least one environmental parameter value associated with a wind turbine. The method further includes predicting a future speed of the wind turbine based upon the at least one operational parameter value and the at least one environmental parameter value. The method further includes determining whether the predicted future speed of the wind turbine exceeds a threshold speed, and if the predicted future speed of the wind turbine exceeds the threshold speed, controlling the wind turbine so that an actual future speed of the wind turbine does not exceed the threshold speed.

In accordance with another aspect of the present disclosure, a control system for a wind turbine is disclosed. The control system includes at least one processor for receiving at least one operational parameter value and at least one environmental parameter value. The processor executes the steps of predicting a future speed of the wind turbine based upon the at least one operational parameter value and the at least one environmental parameter value. The processor further executes the steps of determining whether the predicted future speed of the wind turbine speed exceeds a threshold speed and if the predicted future speed of the wind turbine exceeds the predefined threshold speed, controlling the wind turbine so that an actual future speed of the wind turbine does not exceed the threshold speed.

In accordance with yet another aspect of the present disclosure, a wind turbine is disclosed. The wind turbine includes a rotor, at least one rotor blade coupled to the rotor, at least one generator coupled to the rotor, and at least one processor for receiving at least one operational parameter value and at least one environmental parameter value. The processor executes the steps of predicting a future speed of the wind turbine based upon the at least one operational parameter value and the at least one environmental parameter value. The processor further executes the steps of determining whether the predicted future speed of the wind turbine exceeds a threshold speed, and if the predicted future speed of the wind turbine exceeds the predefined threshold speed, controlling the wind turbine so that an actual future speed of the wind turbine does not exceed the threshold speed.

Various features and aspects of embodiments of the present system and techniques will become better understood when the following detailed description is read with reference to the accompanying drawings in which like characters represent like parts throughout the drawings, wherein:

FIG. 1 is a perspective view of an exemplary embodiment of an exemplary wind turbine in accordance with an embodiment of the present invention.

FIG. 2 is a partial-cut away perspective view of a portion of the wind turbine shown in FIG. 1 in accordance with an embodiment of the present invention.

FIG. 3 is block diagram of an exemplary embodiment of a control system for the wind turbine shown in FIGs. 1 and 2 in accordance with one embodiment of the invention.

FIG. 4 is flowchart illustrating an exemplary embodiment of a method for controlling the wind turbine as shown in FIGs. 1 and 2 in accordance with an embodiment of the present invention.

FIGs. 5 and 6 are graphs illustrating predicted generator speeds based on various operational parameter values and environmental parameter values in accordance with an embodiment of the present invention.

FIG. 7 is a consolidated graph illustrating various predicted generator speed plots at varying wind speeds in accordance with an embodiment of the present invention.

FIG. 8 is a graph illustrating a predicted maximum generator speed versus time under circumstances of grid loss in accordance with an embodiment of the present invention.

Embodiments discussed herein are generally directed towards controlling wind turbines. According to one embodiment, the method describes a predictive technique for determining if a speed of a wind turbine will exceed a threshold speed in the near future and generating precautionary or control actions based on the comparison. As used herein, the term "blade" is intended to be representative of any device that provides reactive force when in motion relative to a surrounding fluid medium. As used herein, the term "wind turbine" is intended to be representative of any device that generates rotational energy from wind energy, and more specifically, converts kinetic energy of wind into mechanical energy. As used herein, the term "wind generator" is intended to be representative of any wind turbine that generates electrical power from rotational energy generated from wind energy, and more specifically, converts mechanical energy converted from kinetic energy of wind to electrical power. As used herein, the term "windmill" is intended to be representative of any wind turbine that uses rotational energy generated from wind energy, and more specifically mechanical energy converted from kinetic energy of wind, for a predetermined purpose other than generating electrical power, such as, but not limited to, pumping a fluid and/or grinding a substance. Further, as used herein, the terms "blade pitch angle", "rotor blade pitch angle" and "pitch angle" are used interchangeably.

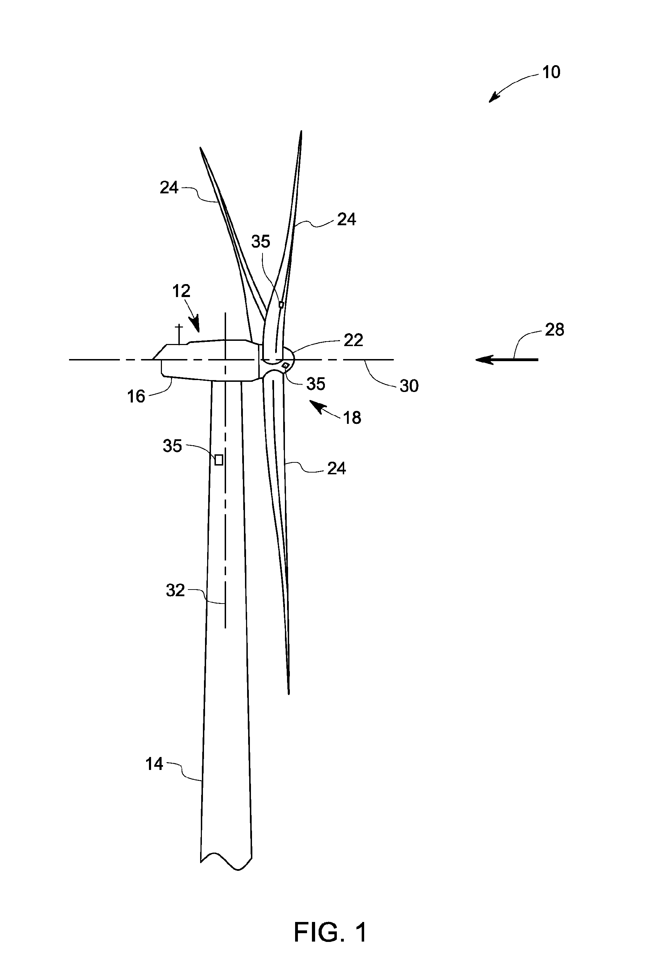

FIG. 1 is an exemplary representation of a wind turbine 10. Wind turbine 10 described and illustrated herein includes a generator 12 for generating electrical power from wind energy. However, in some embodiments, wind turbine 10 may include any type of wind turbine, such as, but not limited to, a windmill (not shown). Wind turbine 10 described and illustrated herein includes a horizontal-axis configuration. However, in some embodiments, wind turbine 10 may include, in addition or alternative to the horizontal-axis configuration, a vertical-axis configuration (not shown). Wind turbine 10 may be coupled to a power grid (not shown) for receiving electrical power therefrom to drive operation of wind turbine 10 and/or its associated components and/or for supplying electrical power generated by wind turbine 10 thereto. Although only one wind turbine 10 is shown, in some embodiments, a plurality of wind turbines 10 may be grouped together such that the group may be referred to as a "wind farm".

In some embodiments, wind generator 12 is mounted on a tower 14. In some embodiments wind turbine 10 includes, in addition or as an alternative to tower-mounted wind generator 12, a generator adjacent the ground and/or a surface of water. The height of tower 14 may be selected based upon factors and conditions known in the art. Wind generator 12 includes a body 16, sometimes referred to as a "nacelle," and a rotor (generally designated by 18) coupled to the body 16 for rotation with respect to the body 16 about an axis of rotation 20. Rotor 18 includes a hub 22 and one or more blades 24 (sometimes referred to as "airfoils") extending radially outwardly from hub 22 for converting wind energy into rotational energy. Although rotor 18 is described and illustrated herein as having three blades 24, rotor 18 may have any number of blades 24. The length of the blades 24 may vary depending on the application. In some embodiments, the rotor 18 generally faces upwind to harness wind energy. In certain other embodiments, rotor 18 generally faces downwind to harness wind energy. In some embodiments, rotor 18 may not face exactly upwind and/or downwind, but may be inclined generally at any angle (which may be variable) with respect to a direction of the wind to harness energy therefrom.

The rotor 18 may include blades 24 of any shape, type, and configuration. One example of rotor blades 24 is a ducted rotor. Another example of rotor blades 24 is a darrieus wind turbine rotor. Another example of rotor blades 24 is a savonious wind turbine rotor. Yet another example of rotor blades 24 is a traditional windmill rotor for pumping water, such as, but not limited to, four-bladed rotors having wooden shutters and/or fabric sails.

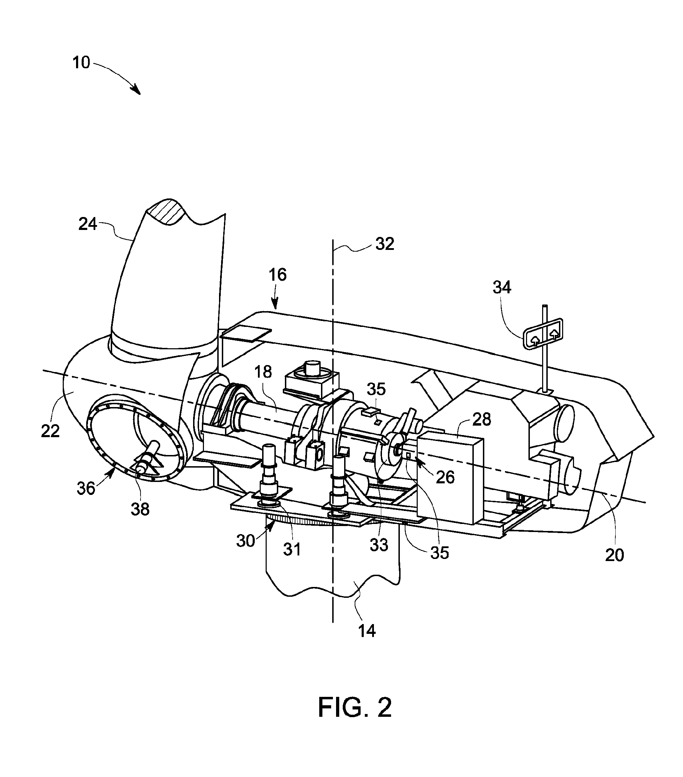

FIG. 2 is a partial-cut away perspective view of a portion of the wind turbine shown in FIG. 1. The wind generator 12 includes an electrical generator 26 coupled to rotor 18for generating electrical power from the rotational energy generated by rotor 18. In one embodiment, the electrical generator 26 is coupled to the rotor 18 via a gearbox (not shown). The generator 26 may be any suitable type of electrical generator, such as, but not limited to, a wound rotor induction generator. General operation of the electrical generator to generate electrical power from the rotational energy of rotor 18 is known in the art and therefore will not be described in more detail herein. In some embodiments, wind turbine 10 may include one or more control systems 28 coupled to some or all of the components of wind generator 12 for generally controlling operation of wind generator 12 and/or as some or all of the components thereof. In an exemplary embodiment, the control system 28 is mounted on the wind generator 12. However, additionally or alternatively, one or more control systems 28 may be remote from the wind generator 12 and/or other components of the wind turbine 10. The control systems 28 may be used for overall system monitoring and control including, for example, blade pitch and speed regulation, high-speed shaft and yaw brake application, yaw and pump motor application, and/or fault monitoring. Alternative distributed or centralized control architectures may be used in some embodiments. The control system 28 is described in greater detail below.

In some embodiments, the wind generator 12 may include a brake 33 such as, for example, a hydraulic parking brake, an electromechanical brake, a centrifugal brake, an Eddie- current brake (retarder), or a magnetic brake, for braking rotation of the rotor 18 to, for example, slow rotation of the rotor 18, brake the rotor 18 against full wind torque, and/or reduce the generation of electrical power from the electrical generator 26. Furthermore, in some embodiments, the wind generator 12 may include a yaw system 30 for rotating the wind generator 12 about an axis of rotation 32 for changing a yaw of rotor 18. More specifically, the yaw system 30 may be used for changing an orientation direction of the rotor 18 to adjust an angle between the orientation direction of the rotor 18 and a direction of the wind. In the illustrated embodiment, the yaw system 30 includes a yaw drive 31 and a yaw deck 37. The control system 28 may be coupled to the yaw system 30 for controlling the yaw system 30.

The wind turbine 10 further includes one or more sensors 35 coupled to one or more components of the wind turbine 10 and/or the power grid, for measuring one or more parameters of such components. The sensors 35 may include, but are not limited to, sensors configured to measure displacements, yaw, blade pitch, moments, strain, stress, twist, damage, failure, rotor torque, rotor speed, a grid anomaly in the power grid, generator speed, and/or an anomaly of power supplied to any component of the wind turbine 10. It should be noted herein that a blade pitch or blade pitch angle refers to an angle of attack of the blades of the wind turbine 10 into or out of the wind. Further a speed of the wind turbine 10 refers to a speed of one or more of the generator or the rotor of the wind turbine 10.

Although the exemplary sensors 35 are illustrated herein as coupled to various components of wind turbine 10, including the tower 14, the plurality of blades 24, and the hub 22, the sensors 35 illustrated herein are not limited to the components each sensor is shown as coupled to, nor the location shown on such components. Rather, the sensors 35 may be coupled to any component of the wind turbine 10 and/or the power grid at any location thereof for measuring any parameter thereof. In one embodiment, a sensor 35 may include an anemometer 34 for measuring wind speed and/or wind direction. The anemometer 34, in some embodiments, may be coupled to the control system 28 for sending measurement output to the control system 28 for processing thereof. In some embodiments, the anemometer 34 may be coupled to the control system 28 for sending measurements thereto for controlling other operations of wind turbine 10. In a particular embodiment, the anemometer 34 may transmit measurement output to the control system 28 for controlling and/or changing a yaw of rotor 18 using the yaw system 30. Alternatively, the anemometer 34 may be coupled directly to the yaw system 30 for controlling and/or changing a yaw of the rotor 18.

The wind generator 12 may further include a variable blade pitch system 36 for selectively controlling a pitch angle of the rotor blades 24. The control system 28 may be coupled to the variable blade pitch system 36 for controlling the system 36. In some embodiments, the pitch angles of the blades 24 are individually controlled by the variable blade pitch system 36. The variable blade pitch system 36 includes one or more actuators 38 coupled to the hub 22 and the blades 24 for changing the pitch angle of the blades 24. The actuators 38 may include but are not limited to, electrical motors, hydraulic cylinders, springs, and/or servo-mechanisms. The actuators 38 may be driven by any suitable means, such as, but not limited to, hydraulic fluid, electrical power, electro-chemical power, and/or mechanical power. Additionally or alternatively, actuators 38 may be driven by energy extracted from rotational inertia of the rotor 18, and/or a stored energy source (not shown) that supplies power to components of the wind turbine 10, during a grid anomaly in the power grid coupled to wind turbine 10. For example, a grid anomaly in the utility power grid may include, but is not limited to, a power failure, an undervoltage condition, an overvoltage condition, and/or an out-of-frequency condition. In some embodiments, the stored energy source includes hydraulic accumulators, electrical generators, stored spring energy, capacitors, and/or batteries. The stored energy sources may be located anywhere within, on, adjacent to, and/or remote from wind turbine 10.

In a particular embodiment, in case of loss of grid power, it would be desirable to be able to control the pitch of the blades 24 to assist with braking during shutdown. In this case, there may not be power available to operate the variable blade pitch system 36. Therefore, it is desirable that a backup source of energy (not shown) is provided in the rotor 18 to provide emergency backup power for the variable blade pitch system 36. Battery packs or other sources of backup energy (not shown) may be provided in the hub 22 to provide backup power to the variable blade pitch system 36 for each of the blades 24.

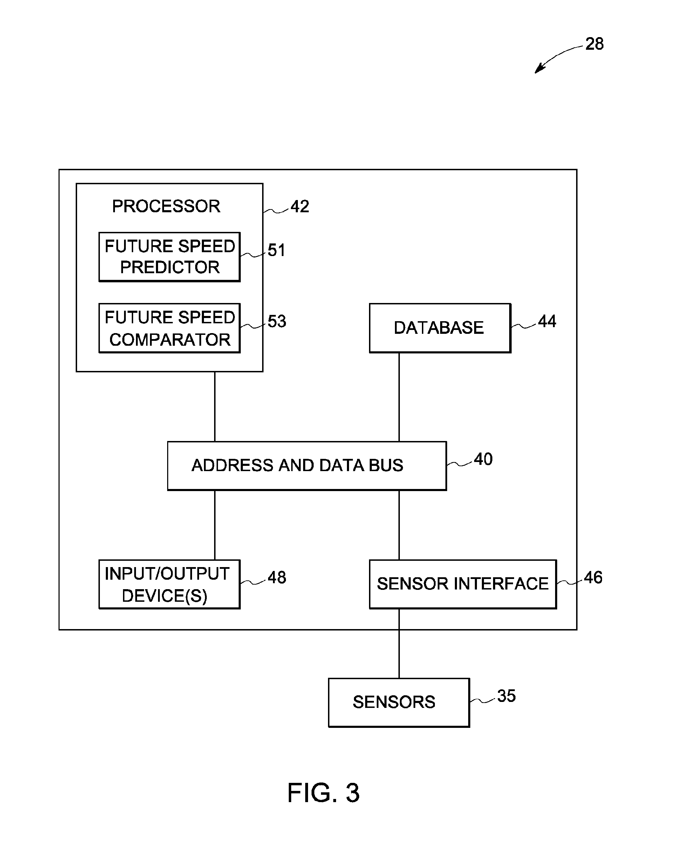

FIG. 3 is a block diagram of the exemplary control system 28 according to one embodiment of the invention. The control system 28 includes an address and data bus 40 or other communications device to communicate information. The control system 28 further includes a processor 42 including a future speed predictor 51 and a future speed comparator 53. The processor 42 is coupled to the address and data bus 40. The processor 42 is communicatively coupled, via the address and data bus 40, to a sensor interface 46, a database 44, and one or more input/output devices 48. Although only one processor 42 and database 44 are illustrated in the embodiment shown in FIG. 3, the control system 28 of FIG. 3 may include any number of processors 42 and databases 44.

The input/output devices 48 may include any device to provide input data to the control system 28 and/or to provide outputs, such as, but not limited to, yaw control and/or pitch control outputs. Instructions may be provided to memory, such as the database 44, from a storage device, such as, but not limited to, a magnetic disk, a read-only memory (ROM) integrated circuit, CD-ROM, and/or DVD, via a remote connection that is either wired or wireless, providing access to one or more electronically-accessible media, etc. In some embodiments, hard-wired circuitry can be used in place of or in combination with software instructions. Thus, execution of sequences of instructions is not limited to any specific combination of hardware circuitry and/or software instructions.

The sensor interface 46 coupled to the processor 42 allows the control system 28 to communicate with the sensors 35. Sensor interface 46 may include, for example, one or more analog-to-digital converters that convert analog signals into digital signals that can be used by the processor 42. In one embodiment, in addition to obtaining the operational parameters such as speed of the wind turbine and pitch angle of blades as discussed above, the sensors 35 are used for measuring environmental parameters such as current wind speed and current wind pressure for communicating to the processor 42. Optionally, the sensors 35 may also be used for sensing other environmental parameters such as direction of wind speed, mass density of air ($\delta$) and effective wind speed ($V_{eff}$) etc. In one embodiment, effective wind speed may be defined as the spatial average of a wind field over a rotor plane with the wind stream being unaffected by the wind turbine 10, i.e., as if the wind turbine 10 is not present. In another embodiment, the effective wind speed ($V_{eff}$) is a function of a current or present wind speed determined from the sensors 35.

The database 44 is coupled to the address and data bus 40 to store and transfer various information and instructions to be executed by the processor 42. In one embodiment, the database 44 can also be used to store temporary information. In another embodiment, the database 44 can be used to store static (*i.e.*, non-changing) information. According to one exemplary embodiment, the database 44 includes information concerning operational parameters of the wind turbine such as information concerning aero dynamics of the wind turbine or model information of rotor dynamics including rotor blade length and rotor disc radius ($R$), Quasi-stationary aerodynamic coefficient or torque coefficient ($C_M$), an instantaneous rotor blade pitch angle ($\theta$) corresponding to a specific time instant (such as a current rotor blade pitch angle), and a planned or predetermined variation (or rate of change) in the rotor blade pitch angle in the future. It is to be noted that the instantaneous blade pitch angle may be measured using the sensors 35.

It should be noted herein that operational information of the wind turbine may refer to any information associated with the operation of the wind turbine. The database 44 may transfer the information concerning the operational parameter values of the wind turbine 10 to the processor 42 either in response to a query from the processor 42 or automatically at predefined periodic intervals of time. The database 44 may be configured to transfer such information in real time to the processor 42.

Further, a future speed predictor 51 of the processor 42 obtains the values of one or more operational parameters from the one or more sensors 35 and/or database 44. For example, the future speed predictor 51 of the processor 52 obtains the values of an instantaneous blade pitch angle at a present time instant from one or more of the sensors 35 or as stored in the database 44. The future speed predictor 51 may compute or determine additional operational parameters from the one or more parameters obtained from the sensors 35. For example, the future speed predictor 51 obtains operational parameters such as a future or expected blade pitch angle using the instantaneous blade pitch angle.

In one example, the future speed predictor 51 determines the future or expected blade pitch angle based on the instantaneous blade pitch angle and the planned or predetermined variation in the blade pitch angle as stored in the database 44. A variation in the blade pitch angle is defined as the rate of change of the blade pitch angle with time. In one example, the rate of change is a static value. In another example, the rate of change may be different at different instants of time.

In another example, the future speed predictor 51 determines the future or expected blade pitch angle based on the instantaneous blade pitch angle (as obtained from the database 44 or the sensors 35) and an "expected" variation in the rotor blade pitch angle from the instantaneous blade pitch angle. In one embodiment, the "expected" variation in the rotor blade pitch angle is computed or calculated or determined by the future speed predictor 51 and/or any other component in the processor 42 based on the various operational and environmental parameters. In another example, any other suitable method or algorithm is employed by the future speed predictor 51 and/or the other components in the processor 42 to obtain the "expected" variation in the blade pitch angle.

The "expected" variation in the blade pitch angle is of great advantage under situations where the planned variation in the blade pitch angle may not be obtained from the database 44. Under such circumstances, the future or expected blade pitch angle may be determined based on the "expected" variation in the blade pitch angle. In one example, the future or expected blade pitch angle may be determined based on both the planned variation in the blade pitch angle as well as the "expected" variation in the blade pitch angle.

Similarly, the future speed predictor 51 can also obtain one or more values of environmental parameters from the one or more sensors 35 and/or the database 44. The environmental parameters include any ambient or environmental conditions affecting an operation of the wind turbine, such as a current wind speed, an estimated future wind speed *etc.* It may be possible to obtain values for estimated future wind speed using some prediction techniques or mathematical algorithms as applied on operational and environmental parameters of the wind turbine. In one example, the estimated future wind speed may be determined using LIDAR (Light Detection and Ranging) sensors. Furthermore, the future speed predictor 51 may also determine an effective speed of the wind based on the current wind speed and the estimated future wind speed.

Further, in response to obtaining the one or more operational parameters and the one or more environmental parameters, the future speed predictor 51 predicts a future speed of the wind turbine as a function of the one or more operational parameters and the one or more environmental parameters. A future speed of the wind turbine refers to a speed of the wind turbine at any instant that is subsequent to or follows a current or present time instant. That is, if a present time instant is T1 and a future time instant is T2 then T2 follows T1 in time. In other words, future speed (s) is the speed of a wind turbine at future time instant (s), where the future time instant (s) follow a current or present time instant.

In one embodiment, the future speed predictor 51 of the processor 42 predicts a future speed of the electric generator or a future speed of the rotor as a speed of the wind turbine, as described herein with reference to Equations (110), (120), and (130).

Typically, an angular speed ($\omega$) of the rotor of the wind turbine is characterized as:

$$J_r \frac{d}{dt}\omega = M_{z,Aero} - M_r, \qquad \text{Equation (110)}$$

where $J_r$ represents a moment of inertia for the wind turbine, $M_{z,Aero}$ represents a torque applied on the rotor due to the wind, and $M_r$ represents a summation of all counter torque components acting on the rotor (either directly or via a gearbox). The torque components include one or more of a counter torque provided by the generator, a torque applied by a braking device, a torque applied by emergency devices for stopping the wind turbine 10 and torque components pertaining to mechanical and electrical losses.

Further, the torque $M_{z,Aero}$ applied on the rotor may be further characterized by:

$$M_{z,Aero} = \frac{1}{2}\rho\pi R^3 V_{eff}^{2} C_M(\lambda_{eff}, \theta), \qquad \text{Equation (120)}$$

where $\rho$ represents a density of the air, $R$ represents a radius of the rotor (or blade length), $V_{eff}$ represents an effective speed of the wind, $C_M$ represents a torque coefficient, $\lambda_{eff}$ represents an effective tip- speed- ratio, and $\theta$ represents rotor blade collective (average) pitch angle. The torque coefficient ($C_M$) is a static non- linear function of the average blade pitch angle and the effective tip- speed- ratio. The concept of tip- speed- ratio $\lambda_{eff}$ is introduced for a simpler notation, where

$$\lambda_{eff} = \frac{\omega R}{V_{eff}}, \qquad \text{Equation (130)}$$

where $V_{eff}$ represents an effective speed of the wind, and $R$ represents rotor radius (the blade length). In one embodiment, it is possible to define tip- speed- ratio $\lambda$eff as a reciprocal of the above relation.

Furthermore, by applying mathematical analysis on the Equations (120) and (110), the function may be characterized as:

$$\omega(t + \Delta t) = \omega(t) + \int_t^{t+\Delta t} \frac{d}{dt}\omega(\tau)d\tau \qquad\qquad \text{Equation (140)}$$

where $\omega$ *(t+$\Delta$t)* represents a predicted future speed of the rotor at a time *(t+$\Delta$t)* , where t is a current time instant and *(t+$\Delta$t)* is a future time instant; $\omega$ *(t)* represents a current speed of the rotor 18, and $\int_t^{t+\Delta t} \frac{d}{dt}\omega(\tau)d\tau$ represents the change in rotational speed, expressed as the integral of the rotational acceleration $\frac{d}{dt}\omega(\tau)$ from time t to time *(t+$\Delta$t)* .

In the above embodiment, the future speed predictor 51 of the processor 42 is used to compute the future speed of the rotor based on the relation (*130*) characterized by the environmental parameter values (for example, effective windspeed, $V_{eff}$) and the operational parameter values (for example, current speed of the electric generator, blade pitch angle $\theta$).

The above mathematical equations (110), (120), (130), and (140) for determining the future speed of the rotor, in particular, and the future speed of the wind turbine, in general, are only exemplary and not intended to be limiting. Any other suitable equations and calculations may be employed on the operational and environmental parameters to predict the future speed of the wind turbine. Also, in addition to obtaining the future speed of the wind turbine at a future time instant, the future speed predictor 51 of the processor 42 may also obtain a plot of the predicted future speeds of the wind turbine 10 corresponding to varying future time instants.

Further, upon determining the future speed of the wind turbine 10, such as the future speed of the rotor or the future speed of the generator, the future speed comparator 53 of the processor 42 may determine if the future speed of the wind turbine exceeds a predetermined threshold speed. In one embodiment, the predetermined threshold speed is an over- speed limit as provided by a manufacturer of the wind turbine. In another embodiment, the predetermined threshold speed is an over- speed limit for the wind turbine as determined by the processor 42 based on various parameters of the wind turbine. In yet another embodiment, the predetermined threshold speed is "n" times the over-speed limit provided by the manufacturer of the wind turbine.

If the future speed comparator 53 of the processor 42 determines that the future speed of the wind turbine exceeds a threshold speed, then the processor 42 may employ a suitable control action to control the wind turbine. In one embodiment, the future speed comparator 53 may generate control signals to actuate the brake via the actuator on the rotor 18 of the wind turbine to control the wind turbine. In another embodiment, the future speed comparator 53 provides a control signal to the yaw system to vary a blade pitch angle differently from the predefined variation (rate of change) of blade pitch angle, thereby ensuring that an actual future speed of the wind turbine 10 does not exceed the predetermined threshold speed. In yet another embodiment, the future speed comparator 53 may employ any other suitable control technique that ensures that the actual future speed of the wind turbine does not exceed the predetermined threshold speed in response to determining that the predicted future speed of the wind turbine exceeds the predetermined threshold speed of the wind turbine. The predicted speed of the wind turbine 10 thus estimated based on the above method 41 ensures that the future speed comparator 53 employs an appropriate action to control the speed of the wind turbine to prevent the wind turbine 10 from reaching an overspeeding condition in the near-future. Again, the near-future may be defined as a time instant (or time instants) that subsequently follow a current or present time instant at which the various operational and environmental parameter values are obtained. The prevention of overspeed condition results in enhanced safety of the wind turbine 10 and its various components described with reference to FIG. 1 and FIG. 2, resulting in improved operations of the wind turbine 10.

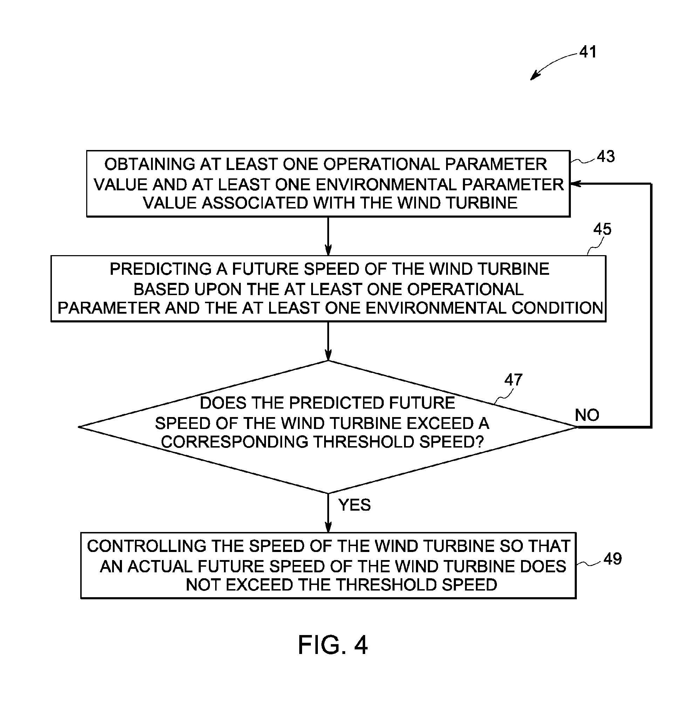

FIG. 4 is flowchart illustrating an exemplary embodiment of a method 41 for controlling the wind turbine 10 as shown in FIGS. 1, 2, and 3. The method includes obtaining one or more operational parameter values and one or more environmental parameter values associated with the wind turbine 10 as represented by step 43. As previously noted, the one or more operational parameters include one or more parameters affecting an operation of the wind turbine 10 such as, but not limited to, a current speed of the wind turbine 10 (or a current speed of the rotor 18 of the wind turbine 10 or a current speed of the electric generator 26 of the wind turbine 10), a current blade pitch angle, a predetermined variation (or rate of change) in the blade pitch angle in future, and aero dynamics of the wind turbine 10 including information associated with the rotor 18 such as diameter of the rotor 18 a torque experienced at the rotor 18 due to the wind, etc. Further, the one or more environmental parameters include one or more environmental or ambient conditions affecting an operation of the wind turbine 10, such as, but not limited to, an effective speed of the wind at a present time instant and/or at a future time instant, a direction and pressure of the wind *etc.* In one embodiment, one or more sensors 35 are employed to measure the one or more operational parameters and one or more environmental parameters. In a particular embodiment, an anemometer 34 is employed for measuring the one or more environmental parameters. In one embodiment, the various operational parameters and the environmental parameters of the wind turbine are obtained in real time.

Further, in response to obtaining the one or more operational parameters and one or more environmental parameters, the method includes predicting a future speed of the wind turbine 10 as indicated by step 45. In one embodiment, a future speed of the wind turbine 10 includes a future speed associated with either the rotor 18 or the electric generator 26 of the wind turbine 10. The term "future" in the context of this invention refers to any time frame or time instant that is subsequent to or that follows the current or present time frame or time instant at which values of the one or more operational parameters and environmental parameters are obtained. For example, assuming that the one or more operational parameter values and the one or more environmental parameter values are obtained at a time instant T1, then the predicted future speed relates to a time instant T2, where the time instant T2 is subsequent to (or follows) the time instant T1 such that T2 = T1 + $\Delta$T, where $\Delta$T is the time difference between T1 and T2.

Further, in one embodiment, real time or near real time predictions of the speed of the wind turbine 10 are obtained by performing real time calculations on the obtained operational and environmental parameters. Moreover, the predicted speed of the wind turbine 10 may be stored in a database (such as database 44 shown in FIG. 3) of the wind turbine for a future reference. Thus, the database may be continually adaptively updated based on any new predictions corresponding to any new combinations of the operational and environmental parameters.

In another embodiment, a database (such as the database 44 shown in FIG. 3) stores various combinations of possible wind turbine speeds corresponding to the operational and environmental parameters. Therefore, the real time or near real time predictions of the wind turbine are obtained by determining one or more operational and environmental parameters and looking up in the database (such as the database 44 of FIG. 1) to obtain a prediction value of the speed of the wind turbine corresponding to specific operational and environmental parameters.

Next, upon determining the predicted future speed of the wind turbine 10, the predicted future speed is compared to a predetermined/ predefined threshold speed of the wind turbine 10 to check if the predicted future speed of the wind turbine 10 exceeds the predetermined/ predefined speed of the wind turbine 10 as represented by step 47. In one embodiment, the predetermined/ predefined threshold speed of the wind turbine 10 refers to a maximum over speeding limit of the rotor 18 or the electric generator 26 of the wind turbine 10. For example, the predetermined or predefined threshold speed limit may be a predefined or predetermined percentage of the over speeding limit. The predetermined or predefined threshold speed of the wind turbine 10 is based on various parameters of the wind turbine 10 and may be defined by either a manufacturer of the wind turbine 10 or may be computed using parameters depending on various system constraints corresponding to the wind turbine 10.

Further, if it is determined that the predicted future speed of the wind turbine 10 exceeds a predetermined threshold speed, then a control action is applied on the wind turbine 10 to ensure that an actual future speed of the wind turbine 10 does not exceed the predetermined threshold speed as represented by the step 49. In one embodiment, the control step includes generating control signals to actuate the brake 33 including one or more of a mechanical brake, a hydraulic parking brake, an electromechanical brake, a centrifugal brake, an Eddie- current brake, and a magnetic brake on the rotor of the wind turbine to control the wind turbine. In yet another embodiment, the control step includes actuating control signals for applying a yaw brake for achieving a rotation of the nacelle of the wind turbine out of the direction of the wind. In another embodiment, the control step includes actuating control signals that result in a proportional increase or decrease in a level of braking, using the brake 33, depending upon a speed of the rotor of the wind turbine or other associated operational and environmental parameters. In another embodiment, the control step includes varying a blade pitch angle differently from the predefined variation of the blade pitch angle, thereby ensuring that an actual future speed of the wind turbine 10 does not exceed the predetermined threshold speed. In yet another embodiment, any other suitable control technique that ensures that the actual future speed of the wind turbine 10 does not exceed the predetermined threshold speed may be employed in response to determining that the predicted future speed of the wind turbine 10 exceeds the predetermined threshold speed.

However, if it is determined that the predicted future speed of the wind turbine does not exceed the predetermined threshold speed, the method 40 returns to the step 43, where again the operational and environmental parameters are obtained at the next time instant. The method 41 is then repeated.

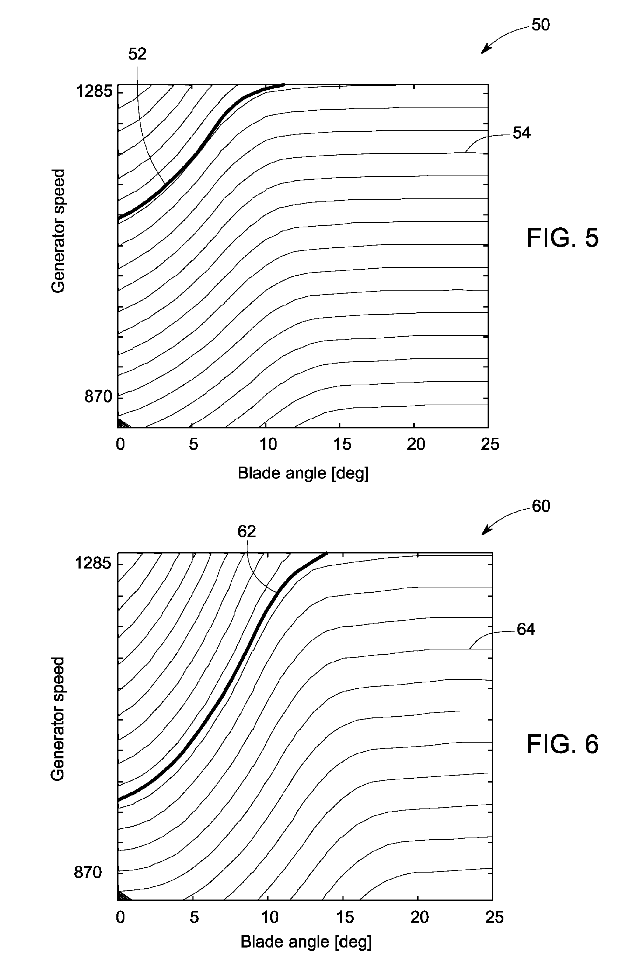

FIG. 5 shows an exemplary plot 50 of the predicted future generator speed at various future time instants, as stored in the memory of the wind turbine such as the wind turbine 10 of FIG. 1, or as computed in real time. In the illustrated embodiment, an exemplary current effective wind speed is presumed to be 7 m/s and assumed to be constant in a prediction window. In one example, a prediction window may start from a current time instant until a time instant in future. Further, a threshold speed (not shown) of the wind turbine is assumed to be 1300 rpm (rotations per minute). As previously noted, the threshold speed of the wind turbine may be a maximum speed of the electric generator or the rotor of the wind turbine as specified by a manufacturer of the wind turbine or as determined from various parameters associated with the wind turbine.

The x-axis of the plot 50 represents various blade pitch angles measured in degrees. In one embodiment, the various blade pitch angles are determined based on a predefined blade pitch angle stored in a memory (such as the database 44 shown in FIG. 3) of the wind turbine. The y-axis of the plot 50 represents a generator speed measured in rotations per minute. Each of the curves 54 represent combinations of current generator speed, current blade pitch angle, and the effective wind speed, which is presumed to be constant in the prediction window, for which a maximum predicted generator speed in the prediction window is equal. For specific combinations of the current generator speed, the blade angle, and the effective wind speed, if the wind turbine is predicted to exceed the threshold speed (in this example, 1300 rpm), a control action is applied.

In the illustrated embodiment, the curve 52 represents a threshold curve (or a maximum threshold curve) above which all predicted future values of the generator speed for the combination of the current generator speed, the blade angle, and the wind speed exceed a predetermined threshold speed (in this case, 1300 rpm) at the future time instant. Therefore, for all scenarios above the threshold curve 52, a control action such as at least one of changing a variation in the blade pitch angle, applying one or more of a mechanical brake, a hydraulic parking brake, an electromechanical brake, a centrifugal brake, an Eddie-current brake, and a magnetic brake on a rotor of the wind turbine is applied to control the wind turbine.

FIG. 6 shows another exemplary plot 60 of the predicted future generator speeds, where the effective current wind speed is presumed to be 10 m/s in a prediction window and a threshold speed of a wind turbine (such as wind turbine 10 shown in FIG. 1) is presumed to be 1300 rpm. The plot 60 can be either calculated in real time by the wind turbine based on certain parameters such as operational parameters and environmental parameters or calculated and stored in a memory of the wind turbine.

The x-axis of the plot 60 represents various blade pitch angles measured in degrees. In one embodiment, the various blade pitch angles are determined based on a predefined variation in the blade pitch angles with respect to time. The y-axis of the plot 60 represents a speed of the wind turbine measured in rotations per minute. In one embodiment, the y-axis may represent a speed of the electric generator of the wind turbine. In another embodiment, the y-axis represents a speed of the rotor of the wind turbine. Further, each of the curves 64 represents combinations of current generator speed, current blade pitch angle, and the effective wind speed, which is presumed to be constant in the prediction window, for which a maximum predicted generator speed in the prediction window is equal. For specific combinations of the current generator speed, the blade angle, and the wind speed, if the wind turbine is predicted to reach the threshold speed (in this example, 1300 rpm), a control action is applied.

In the illustrated embodiment, curve 62 represents a threshold curve above which the predicted generator speeds are expected to exceed the predefined threshold speed, such as the predefined threshold speed of 1300 rpm in this example, in the future time instant. Therefore, for any predicted scenarios lying in the region above the curve 62, a control action such as an application of a brake or changing a variation in the blade pitch angle or any other suitable control action is applied.

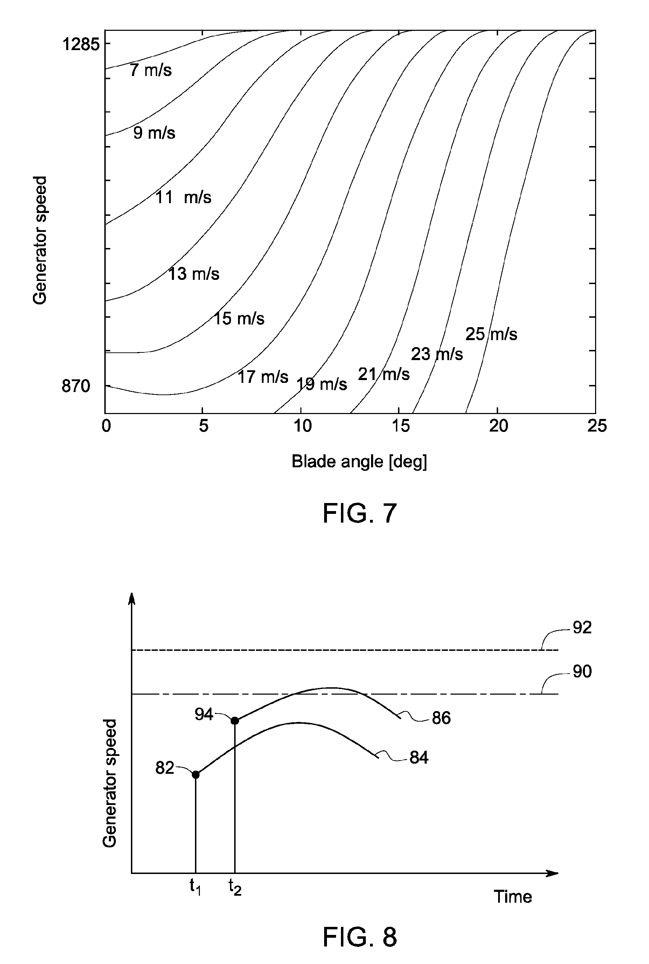

FIG. 7 shows an exemplary collated plot 70 representing a plurality of threshold prediction curves 72 corresponding to particular effective wind speeds. The x-axis represents a blade pitch angle (measured in degrees) for the rotor blades. The blade pitch angle may be determined from a predefined variation (or rate of change) in the blade pitch angles with respect to time, as stored in a memory of the wind turbine. The y-axis represents a speed of the electric generator of the wind turbine. Each of the curves 62 represents a predicted generator speed based on various operational and environmental parameters such as current generator speed, a blade pitch angle, an expected/predicted variation in the blade pitch angle, and an effective wind speed. In one example, the effective wind speed is presumed to be constant in a prediction window, that is, in the window during which the predictions of the generator speed are obtained. Also, each of the curves 62 represents a threshold curve above which any predicted curve with the same wind speed as the threshold curve 62 (and for combinations of present generator speed and blade angle exceeding the values represented in the threshold curve) is expected to exceed the predefined threshold speed. It should be noted herein that the various values of the generator speeds, wind speeds, and blade angles shown in FIGs. 5, 6, and 7 are only exemplary and not limiting. Any other suitable combination of generator speed, wind speed, and blade angle may be considered for the purposes of this invention.

FIG. 8 represents an exemplary plot illustrating a predicted maximum generator speed versus time under conditions of grid loss in a wind turbine, such as the wind turbine 10 of FIG. 1. A grid loss refers to a condition where the wind turbine loses a counter torque from the generator largely owing to loss of connections between the generator and the power grid coupled to the generator. FIG. 8 includes a point 82 at which the wind turbine detects a loss of counter torque from the generator. The line 90 represents a first threshold speed level whereas the line 92 represents a second threshold speed level. Although only two threshold levels are represented in FIG. 8, any number of threshold levels may be modeled based on the over speed limit of the wind turbine. Subsequently, a number of control actions may be actuated depending on the level of threshold speed that may be crossed. For example, a higher level of threshold speed may solicit a stronger control action. As previously noted, the over speed limit of the wind turbine is determined either based upon a specification provided by a manufacturer of the wind turbine or calculated based upon the wind turbine parameters.

Further, the curve 84 represents a predicted maximum generator speed based upon the operational parameter values and environmental parameter values at the time of grid loss at time instant t1. The curve 86 represents a predicted maximum generator speed based upon operational parameter values and environmental parameter values measured shortly after grid loss at point 94 at time instant t2.

In the particular embodiment illustrated in FIG. 8, the predicted generator speed plot 84 based on the operational and environmental parameters obtained at the grid loss point 82 does not indicate that the generator speed will exceed the first threshold speed level 90. However, the predicted generator speed plot 86 corresponding to the operational and environmental parameters obtained shortly after grid loss at point 94 indicates that the generator speed will exceed the first threshold speed level 90. Therefore, in this example, the control mechanisms may be employed by the wind turbine shortly after the grid loss at 82, at point 94. It should be noted herein that the prediction curves obtained at points 82 and 94 indicate different predicted values. This deviation in the prediction may be attributed to the un-modeled aspects of measurement such as an unexpected variation in the speed of the wind turbine or an unexpected variation in the speed of the wind turbine that may be experienced at point 94. In one example, to counter such un-modeled variations, the prediction curves (such as curves 84, 86) may be obtained at periodic intervals of time.

The disclosed predictive techniques for controlled operation of the wind turbine provide many advantages and benefits by way of avoiding over speed and aggressive control methods. Under severe fault conditions, such as loss of grid connection and counter torque from a generator, or faulting of pitch actuator, or combinations thereof, the above disclosed method provides a determination of when a control action should be employed on a wind turbine to provide an effective shutdown while preventing any over speed scenarios and avoiding any mechanical stresses experienced during the aggressive shutdown procedures. The above methods may be additionally employed for predicting unbalanced loads using operational parameters such as rotor speed and pitch asymmetry and environmental parameters such as wind speed. If a predicted unbalanced load exceeds a threshold value, a control method similar to those disclosed above may be employed. In particular, if a predicted unbalanced load exceeds a threshold value, a control method that reduces pitch asymmetry while simultaneously decelerating the wind turbine may be employed for an effective shut down. Similarly, the above disclosed predicted techniques may be utilized in other possible ways to provide an effective shut down to the wind turbine while preventing any over speed conditions.

Furthermore, the skilled artisan will recognize the interchangeability of various features from different embodiments. Similarly, the various method steps and features described, as well as other known equivalents for each such methods and feature, can be mixed and matched by one of ordinary skill in this art to construct additional systems and techniques in accordance with principles of this disclosure. Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

While only certain features of the invention have been illustrated and described herein, many modifications and changes will occur to those skilled in the art. It is, therefore, to be understood that the appended claims are intended to cover all such modifications and changes as fall within the true spirit of the invention.

Various aspects and embodiments of the present invention are defined by the following numbered clauses:

1. A method comprising:

    obtaining at least one operational parameter value and at least one environmental parameter value associated with a wind turbine;
    predicting a future speed of the wind turbine based upon the at least one operational parameter value and the at least one environmental parameter value;
    determining whether the predicted future speed of the wind turbine exceeds a threshold speed; and
    if the predicted future speed of the wind turbine exceeds the threshold speed, controlling the wind turbine so that an actual future speed of the wind turbine does not exceed the threshold speed.

2. The method of clause 1, wherein the predicted future speed of the wind turbine comprises at least one of a predicted future speed of a rotor of the wind turbine and a predicted future speed of a generator of the wind turbine.

3. The method of any preceding clause, wherein:

    obtaining the at least one operational parameter value comprises obtaining at least one of an instantaneous generator speed, an instantaneous blade pitch angle, an expected blade pitch angle, a predefined rate of change of the blade pitch angle, and wind turbine aerodynamics information; and
    obtaining the at least one environmental parameter comprises obtaining at least one of a current wind speed and a future wind speed.

4. The method of any preceding clause, wherein controlling the wind turbine comprises applying at least one of a mechanical brake, a hydraulic parking brake, an electromechanical brake, a centrifugal brake, an Eddie-current brake, a yaw brake, and a magnetic brake to control a rotor of the wind turbine.

5. The method of any preceding clause, wherein controlling the wind turbine comprises varying an actual rate of change of blade pitch angle with respect to a predefined rate of change of blade pitch angle.

6. The method of any preceding clause, further comprising:

predicting the future speed of the wind turbine in real time based on the at least one operational parameter and the at least one environmental parameter.

7. The method of any preceding clause, further comprising:

storing the predicted future speed of the wind turbine in a database.

8. The method of any preceding clause, further wherein:

predicting the future speed of the wind turbine comprises using a database.

9. A control system for a wind turbine, the control system comprising:

at least one processor for receiving at least one operational parameter value and at least one environmental parameter value and executing the steps of:

predicting a future speed of the wind turbine based upon the at least one operational parameter value and the at least one environmental parameter value;
determining whether the predicted future speed of the wind turbine speed exceeds a threshold speed; and
if the predicted future speed of the wind turbine exceeds the predefined threshold speed, controlling the wind turbine so that an actual future speed of the wind turbine does not exceed the threshold speed.

10. The control system of any preceding clause, wherein the predicted future speed of the wind turbine comprises at least one of a predicted future speed of a rotor of the wind turbine and a predicted future speed of a generator of the wind turbine.

11. The control system of any preceding clause, further comprising:

a database for obtaining the at least one operational parameter value.

12. The control system of any preceding clause, wherein the database further stores the predicted future speed of the wind turbine corresponding to the at least one operational parameter value and the at least one environmental parameter value.

13. The control system of any preceding clause, wherein the database further stores at least one value associated with the threshold speed.

14. The control system of any preceding clause, wherein the processor is programmed to generate control signals to actuate at least one of a mechanical brake, a hydraulic parking brake, an electromechanical brake, a centrifugal brake, an Eddie-current brake, and a magnetic brake on a rotor of the wind turbine to control the wind turbine.

15. The control system of any preceding clause, wherein the processor is programmed to generate control signals to vary an actual rate of change of blade pitch angle with respect to a predefined rate of change of blade pitch angle to control the wind turbine.

16. The control system of any preceding clause, wherein the at least one operational parameter comprises at least one of an instantaneous generator speed, an instantaneous blade pitch angle, a predefined rate of change of the blade pitch angle, an expected blade pitch angle, and wind turbine aerodynamics information.

17. The control system of any preceding clause, wherein the at least one environmental parameter comprises at least one of an instantaneous wind speed and a future wind speed.

18. A wind turbine comprising:

a rotor;
at least one rotor blade coupled to the rotor;
at least one generator coupled to the rotor; and
at least one processor for receiving at least one operational parameter value and at least one environmental parameter value and executing the steps of:

predicting a future speed of the wind turbine based upon the at least one operational parameter value and the at least one environmental parameter value;
determining whether the predicted future speed of the wind turbine exceeds a threshold speed; and
if the predicted future speed of the wind turbine exceeds the predefined threshold speed, controlling the wind turbine so that an actual future speed of the wind turbine does not exceed the threshold speed.

19. The wind turbine of any preceding clause, further comprising:

at least a database for obtaining the at least one operational parameter value and the at least one environmental parameter value.

20. The wind turbine of any preceding clause, further comprising: at least one sensor for determining at least one operational parameter value and the at least one environmental parameter value.

**Claims**

1. A method (41) comprising:

obtaining (43) at least one operational parameter value and at least one environmental parameter value associated with a wind turbine (10);
predicting (45) a future speed of the wind turbine (10) based upon the at least one operational parameter value and the at least one environmental parameter value;
determining (47) whether the predicted future speed of the wind turbine (10) exceeds a threshold speed; and
if the predicted future speed of the wind turbine exceeds the threshold speed, controlling (49) the wind turbine (10) so that an actual future speed of the wind turbine does not exceed the threshold speed.

2. The method (41) of claim 1, wherein the predicted future speed of the wind turbine (10) comprises at least one of a predicted future speed of a rotor of the wind turbine and a predicted future speed of a generator of the wind turbine.

3. The method (41) of any preceding claim, wherein:

obtaining (43) the at least one operational parameter value comprises obtaining at least one of an instantaneous generator speed, an instantaneous blade pitch angle, an expected blade pitch angle, a predefined rate of change of the blade pitch angle, and wind turbine aerodynamics information; and
obtaining the at least one environmental parameter comprises obtaining at least one of a current wind speed and a future wind speed.

4. The method (41) of any preceding claim, wherein controlling (49) the wind turbine (10) comprises applying at least one of a mechanical brake, a hydraulic parking brake, an electromechanical brake, a centrifugal brake, an Eddie-current brake, a yaw brake, and a magnetic brake to control a rotor of the wind turbine.

5. The method (41) of any preceding claim, wherein controlling (49) the wind turbine (10) comprises varying an actual rate of change of blade pitch angle with respect to a predefined rate of change of blade pitch angle.

6. The method (41) of any preceding claim, further comprising:

predicting the future speed of the wind turbine (10) in real time based on the at least one operational parameter and the at least one environmental parameter.

7. The method (41) of claim 6, further comprising:

storing the predicted future speed of the wind turbine (10) in a database.

8. The method (41) of any preceding claim, further wherein:

predicting the future speed of the wind turbine (10) comprises using a database.

9. A control system (28) for a wind turbine (10), the control system comprising:

at least one processor (42) for receiving at least one operational parameter value and at least one environmental parameter value and executing the steps of:

predicting (45) a future speed of the wind turbine based upon the at least one operational parameter value and the at least one environmental parameter value;
determining (47) whether the predicted future speed of the wind turbine speed exceeds a threshold speed; and
if the predicted future speed of the wind turbine exceeds the predefined threshold speed, controlling (49) the wind turbine (10) so that an actual future speed of the wind turbine does not exceed the threshold speed.

10. The control system (28) of claim 9, wherein the predicted future speed of the wind turbine (10) comprises at least one of a predicted future speed of a rotor of the wind turbine and a predicted future speed of a generator of the wind turbine.

11. The control system (28) of claim 9 or claim 10, further comprising:

a database for obtaining the at least one operational parameter value.

12. The control system (28) of claim 11, wherein the database (44) further stores the predicted future speed of the wind turbine corresponding to the at least one operational parameter value and the at least one environmental parameter value.

13. The control system (28) of claim 11 or claim 12, wherein the database (44) further stores at least one value associated with the threshold speed.

14. The control system (28) of any of claims 9 to 13, wherein the processor (42) is programmed to generate control signals to actuate at least one of a mechanical brake, a hydraulic parking brake, an electromechanical brake, a centrifugal brake, an Eddie-current brake, and a magnetic brake on a rotor of the wind turbine to control the wind turbine.

15. The control system (28) of any of claims 9 to 14, wherein the processor (42) is programmed to generate control signals to vary an actual rate of change of blade pitch angle with respect to a predefined rate of change of blade pitch angle to control the wind turbine.

FIG. 1

10

24

32

16

34

18

35

22

28

36

26

38

30    31    33    35

20

14

# FIG. 2

28

PROCESSOR — 42

FUTURE SPEED PREDICTOR — 51

FUTURE SPEED COMPARATOR — 53

DATABASE — 44

ADDRESS AND DATA BUS — 40

INPUT/OUTPUT DEVICE(S) — 48

SENSOR INTERFACE — 46

SENSORS — 35

FIG. 3

41

OBTAINING AT LEAST ONE OPERATIONAL PARAMETER
VALUE AND AT LEAST ONE ENVIRONMENTAL PARAMETER
VALUE ASSOCIATED WITH THE WIND TURBINE ⟵ 43

PREDICTING A FUTURE SPEED OF THE WIND TURBINE
BASED UPON THE AT LEAST ONE OPERATIONAL
PARAMETER AND THE AT LEAST ONE ENVIRONMENTAL CONDITION 45

DOES THE PREDICTED FUTURE
SPEED OF THE WIND TURBINE EXCEED A
CORRESPONDING THRESHOLD SPEED? 47   NO

YES

CONTROLLING THE SPEED OF THE WIND TURBINE SO THAT
AN ACTUAL FUTURE SPEED OF THE WIND TURBINE DOES
NOT EXCEED THE THRESHOLD SPEED 49

FIG. 4

FIG. 5

FIG. 6

FIG. 7

FIG. 8